(19) Europäisches Patentamt
European Patent Office
Office européen des brevets

(11) EP 4 729 773 A1

(12) EUROPÄISCHE PATENTANMELDUNG

(43) Veröffentlichungstag:
22.04.2026 Patentblatt 2026/17

(21) Anmeldenummer: 24207477.1

(22) Anmeldetag: 18.10.2024

(51) Internationale Patentklassifikation (IPC):
F04B 35/00 (2006.01)     F04B 35/01 (2006.01)
F02B 39/06 (2006.01)     F04B 49/20 (2006.01)

(52) Gemeinsame Patentklassifikation (CPC):
F04B 35/002; F02B 39/06; F02B 63/06;
F04B 35/01; F04B 49/20

(84) Benannte Vertragsstaaten:
AL AT BE BG CH CY CZ DE DK EE ES FI FR GB
GR HR HU IE IS IT LI LT LU LV MC ME MK MT NL
NO PL PT RO RS SE SI SK SM TR
Benannte Erstreckungsstaaten:
BA
Benannte Validierungsstaaten:
GE KH MA MD TN

(71) Anmelder: Deere & Company
Moline, IL 61265 (US)

(72) Erfinder: BUHRKE, FRANK
68163 Mannheim (DE)

(74) Vertreter: Dehnhardt, Florian Christopher
John Deere GmbH & Co. KG
Global Intellectual Property Services
John-Deere-Straße 70
68163 Mannheim (DE)

(54) **LUFTKOMPRESSOR FÜR EINE REIFENFÜLLANLAGE**

(57) Die Erfindung betrifft einen Luftkompressor (10) für eine Reifenfüllanlage (12), umfassend eine drucklufterzeugende Kompressoreinheit (16) mit einer Antriebswelle (18), und eine zwischen einem ersten und einem zweiten Übersetzungsverhältnis umschaltbare Getriebeeinheit (20), die eine Eingangswelle (22) zum Anschluss an eine Antriebseinrichtung (24) sowie eine mit der Antriebswelle (18) der Kompressoreinheit (16) verbundene Ausgangswelle (26) aufweist.

FIG. 1

**Beschreibung**

Die Erfindung betrifft einen Luftkompressor für eine Reifenfüllanlage.

Insbesondere im Landmaschinenbereich finden Reifenfüllanlagen zunehmenden Einsatz, die eine Anpassung des Reifenfülldrucks und damit der Reifenaufstandsfläche an unterschiedliche Bodenverhältnisse mit dem Ziel der Vermeidung unerwünschter Bodenverdichtungseffekte ermöglichen. Zur Befüllung der Reifen dient ein Luftkompressor mit einer drucklufterzeugenden Kompressoreinheit, die typischerweise über einen Riemen- oder Zahnradtrieb eines Verbrennungsmotors angetrieben wird. Das Übersetzungsverhältnis des Riemen- oder Zahnradtriebs wird derart gewählt, dass selbst erhöhte Motordrehzahlen nicht zu einer mechanischen Überlastung der Kompressoreinheit führen können. Umgekehrt bedeutet dies jedoch, dass es bei vergleichsweise geringen Motordrehzahlen zu einer Unterversorgung mit Druckluft sowie damit einhergehenden übermäßigen Füllzeiten der Reifen kommen kann.

Angesichts dessen ist es Aufgabe der vorliegenden Erfindung, einen hinsichtlich der Konstanz der Drucklufterzeugung verbesserten Luftkompressor der eingangs genannten Art anzugeben.

Diese Aufgabe wird durch einen Luftkompressor für eine Reifenfüllanlage mit den Merkmalen des Patentanspruchs 1 gelöst.

Der erfindungsgemäße Luftkompressor für eine Reifenfüllanlage umfasst eine drucklufterzeugende Kompressoreinheit mit einer Antriebswelle, und eine zwischen einem ersten und einem zweiten Übersetzungsverhältnis umschaltbare Getriebeeinheit, die eine Eingangswelle zum Anschluss an eine Antriebseinrichtung sowie eine mit der Antriebswelle der Kompressoreinheit verbundene Ausgangswelle aufweist. Durch entsprechende Wahl der Übersetzungsverhältnisse lässt sich über den gesamten Drehzahlbereich der Antriebseinrichtung eine hinsichtlich ihrer Konstanz verbesserte Drucklufterzeugung erreichen, was insbesondere dann zutrifft, wenn es sich bei der Antriebseinrichtung um einen Verbrennungsmotor mit einem Riemen- oder Zahnradtrieb handelt, mittels dessen die Eingangswelle der Getriebeeinheit in Drehung versetzbar ist.

Vorteilhafte Weiterbildungen des erfindungsgemäßen Luftkompressors für eine Reifenfüllanlage gehen aus den Unteransprüchen hervor.

Vorzugsweise umfasst die Getriebeeinheit ein erstes Planetengetriebe mit einem mit der Eingangswelle drehverbundenen ersten Sonnenrad und ein zweites Planetengetriebe mit einem mit der Ausgangswelle drehverbundenen zweiten Sonnenrad, wobei an einem gemeinsamen Planetenradträger ein erster Planetenradsatz über erste Planetenräder mit dem ersten Sonnenrad und ein zweiter Planetenradsatz über zweite Planetenräder mit dem zweiten Sonnenrad in Eingriff steht, wobei erste und zweite Planetenräder jeweils drehbar miteinander verbundene Planetenradpaare bilden, wobei zur Umschaltung zwischen den beiden Übersetzungsverhältnissen wahlweise

(i) in einem ersten Betriebsmodus mittels einer gehäusefesten Bremse eine Drehung des Planetenradträgers blockierbar ist (mit dem Effekt, dass jedes der Planetenradpaare eine die beiden Sonnenräder drehverbindende Vorgelegewelle bildet),

(ii) in einem zweiten Betriebsmodus mittels einer Kupplung eine die beiden Planetengetriebe überbrückende Direktdrehverbindung zwischen der Eingangswelle und der Ausgangswelle herstellbar ist.

Das erste Übersetzungsverhältnis beträgt im Falle der Direktverbindung eins, d.h. die Drehzahl der Ausgangswelle ist mit derjenigen der Eingangswelle der Getriebeeinheit identisch. Das zweite Übersetzungsverhältnis ist hingegen frei wählbar und ergibt sich aus den Verhältnissen der Zähnezahlen der Sonnenräder bzw. Planetenräder zueinander. Die Verwendung von hintereinander geschalteten Planetengetrieben mit gemeinsamem Planetenradträger führt dabei zu einer besonders kompakten Bauweise der Getriebeeinheit.

Diese Eigenschaft kommt insbesondere dann zum Tragen, wenn die beiden Planetengetriebe zugleich in Bezug auf die Antriebswelle der Kompressoreinheit koaxial zueinander angeordnet sind.

Das erste Übersetzungsverhältnis ist einem ersten Drehzahlbereich, das zweite Übersetzungsverhältnis hingegen einem demgegenüber erhöhten zweiten Drehzahlbereich der Antriebseinrichtung zugeordnet. Somit erfolgt im ersten Betriebsmodus eine Heraufsetzung der Drehzahl zwischen der Eingangs- und Ausgangswelle der Getriebeeinheit. In einem solchen Fall verhalten sich die Zähnezahlen der Sonnenräder bzw. Planetenräder entsprechend

$$S1 > P1 \text{ und } P2 > S2,$$

wobei S1 bzw. S2 die Zähnezahl des ersten bzw. zweiten Sonnenrads und P1 bzw. P2 die Zähnezahl der ersten bzw. zweiten Planetenräder bezeichnen.

Die Umschaltung zwischen den beiden Übersetzungsverhältnissen kann hierbei auf Veranlassung einer Kontrolleinheit bevorzugt durch pneumatische, aber auch hydraulische Betätigung eines der Bremse bzw. Kupplung jeweils zugeordneten Aktuators nach Maßgabe einer an der Eingangswelle anliegenden Drehzahl erfolgen. Im Falle einer pneumatischen Betätigung wird der erforderliche Luftdruck vom Luftkompressor selbst erzeugt bzw. bereitgestellt sowie in einem Pufferakkumulator zwischengespeichert. Die Kupplung ist während der Startphase der Antriebseinrichtung federbelastet geschlossen und lässt sich erst öffnen, wenn ein zur Betätigung ausreichender Mindestluftdruck in der Größenordnung von 6 bis 7 bar erreicht ist.

Durch gleichzeitiges Öffnen von Bremse und Kupplung ist die Antriebsverbindung zur Kompressoreinheit auch vollständig auftrennbar. Dies ermöglicht eine Einsparung von Antriebsenergie in Betriebsphasen, in denen eine Drucklufterzeugung gerade nicht erforderlich ist.

Der erfindungsgemäße Luftkompressor für eine Reifenfüllanlage wird im Folgenden anhand der beigefügten Zeichnungen näher erläutert. Dabei sind übereinstimmende bzw. hinsichtlich ihrer Funktion vergleichbare Komponenten mit denselben Bezugszeichen gekennzeichnet. Es zeigen:

Fig. 1 eine perspektivische Schnittansicht eines Ausführungsbeispiels des erfindungsgemäßen Luftkompressors für eine Reifenfüllanlage,

Fig. 2 eine schematische Teilansicht des in Fig. 1 wiedergegebenen erfindungsgemäßen Luftkompressors mit einer in einem ersten Betriebsmodus befindlichen Getriebeeinheit, und

Fig. 3 eine schematische Teilansicht des in Fig. 1 wiedergegebenen erfindungsgemäßen Luftkompressors mit der in einem zweiten Betriebsmodus befindlichen Getriebeeinheit.

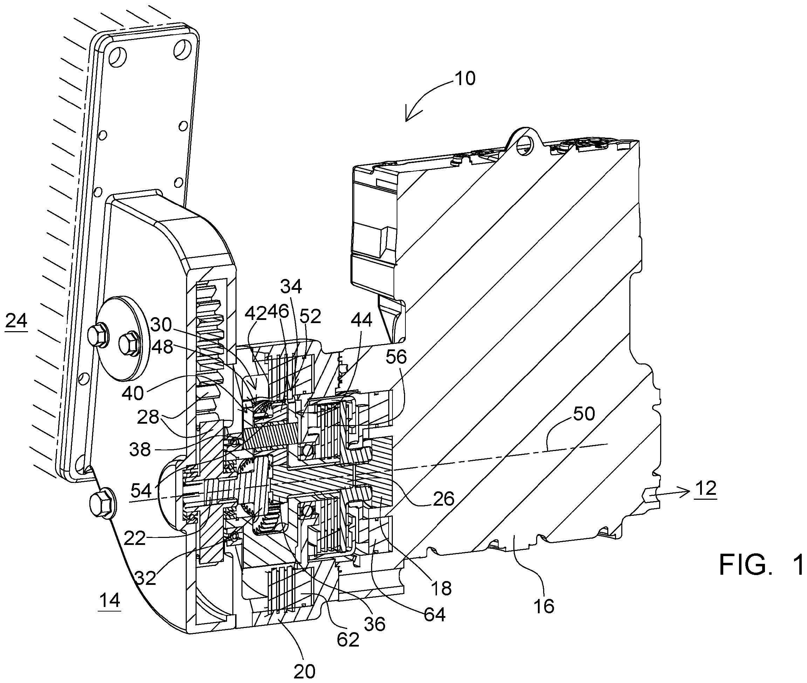

Fig. 1 zeigt eine perspektivische Schnittansicht eines Ausführungsbeispiels des erfindungsgemäßen Luftkompressors für eine Reifenfüllanlage.

Der als integrierte Baugruppe ausgebildete Luftkompressor 10 ist Bestandteil einer in Fig. 1 nicht wiedergegebenen Reifenfüllanlage 12, die sich in einer als landwirtschaftlicher Traktor 14 ausgebildeten Landmaschine befindet. Der prinzipielle Aufbau einer solchen Reifenfüllanlage 12 ist hinlänglich bekannt, die folgende Beschreibung beschränkt sich daher auf den zur Drucklufterzeugung vorgesehenen Luftkompressor 10, der letztlich dem Befüllen zugehöriger Reifen des landwirtschaftlichen Traktors 14 dient.

Wie in Fig. 1 zu erkennen ist, weist der Luftkompressor 10 eine drucklufterzeugende Kompressoreinheit 16 mit einer Antriebswelle 18 sowie eine zwischen einem ersten und einem zweiten Übersetzungsverhältnis umschaltbare Getriebeeinheit 20 auf, die eine Eingangswelle 22 zum Anschluss an eine Antriebseinrichtung 24 sowie eine mit der Antriebswelle 18 der Kompressoreinheit 16 verbundene Ausgangswelle 26 aufweist.

Bei der Antriebseinrichtung 24 handelt es sich vorliegend um einen dieselbetriebenen Verbrennungsmotor (nicht gezeigt), wobei die Eingangswelle 22 der Getriebeeinheit 20 über ein Eingangszahnradpaar 28 mit einem Zahnradtrieb des Verbrennungsmotors konstant in Eingriff steht und so in Drehung versetzt wird.

Im Einzelnen umfasst die Getriebeeinheit 20 ein erstes Planetengetriebe 30 mit einem mit der Eingangswelle 22 drehverbundenen ersten Sonnenrad 32 und ein zweites Planetengetriebe 34 mit einem mit der Ausgangswelle 26 drehverbundenen zweiten Sonnenrad 36. An einem gemeinsamen Planetenradträger 38 steht ein erster Planetenradsatz 40 über erste Planetenräder 42 mit dem ersten Sonnenrad 32 und ein zweiter Planetenradsatz 44 über zweite Planetenräder 46 mit dem zweiten Sonnenrad 36 in Eingriff. Erste und zweite Planetenräder 42, 46 bilden jeweils drehbar miteinander verbundene Planetenradpaare 48. Bei jedem der Planetenradpaare 48 kann es sich um ein Schmiedeteil handeln, an dem ein jeweiliges erstes und zweites Planetenrad 42, 46 einstückig ausgeformt ist. Die Planetenradpaare 48 sind hierbei entlang des Umfangs des gemeinsamen Planetenträgers 38 gleichmäßig verteilt angebracht.

Im Sinne eines platzsparenden Aufbaus sind die beiden Planetengetriebe 30, 34 in Bezug auf die Antriebswelle 18 der Kompressoreinheit 16 koaxial zueinander angeordnet. Somit verlaufen Eingangs-, Ausgangs- und Antriebswelle 22, 26, 18 entlang einer gemeinsamen Drehachse 50.

Zur Umschaltung zwischen den beiden Übersetzungsverhältnissen ist wahlweise

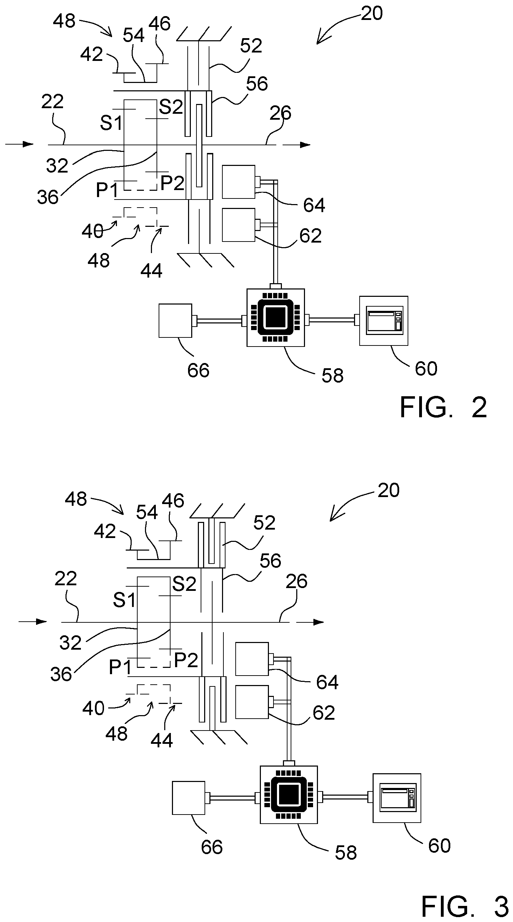

(i) in einem in Fig. 2 wiedergegebenen ersten Betriebsmodus mittels einer gehäusefesten Bremse 52 eine Drehung des Planetenradträgers 38 blockierbar, mit dem Effekt, dass jedes der Planetenradpaare 48 eine die beiden Sonnenräder 32, 36 drehverbindende Vorgelegewelle 54 bildet,

(ii) in einem in Fig. 3 wiedergegebenen zweiten Betriebsmodus mittels einer Kupplung 56 eine die beiden Planetengetriebe 30, 34 überbrückende Direktdrehverbindung zwischen der Eingangswelle 22 und der Ausgangswelle 26 herstellbar.

Das erste Übersetzungsverhältnis beträgt im Falle der Direktverbindung eins, d.h. die Drehzahl der Ausgangswelle 26 ist mit derjenigen der Eingangswelle 22 der Getriebeeinheit 20 identisch. Das zweite Übersetzungsverhältnis ist hingegen frei wählbar und ergibt sich aus den Verhältnissen der Zähnezahlen der Sonnenräder 32, 36 bzw. Planetenräder 42, 46 zueinander.

Das erste Übersetzungsverhältnis ist einem ersten Drehzahlbereich, das zweite Übersetzungsverhältnis hingegen einem demgegenüber erhöhten zweiten Drehzahlbereich des Verbrennungsmotors zugeordnet. Somit erfolgt im ersten Betriebsmodus eine Heraufsetzung der Drehzahl zwischen der Eingangs- und Ausgangswelle 22, 26 der Getriebeeinheit 20. In einem solchen Fall verhalten sich die Zähnezahlen der Sonnenräder 32, 36 bzw. Planetenräder 42, 46 entsprechend

$$S1 > P1 \text{ und } P2 > S2,$$

wobei S1 bzw. S2 die Zähnezahl des ersten bzw. zweiten Sonnenrads 32, 36 und P1 bzw. P2 die Zähnezahl der ersten bzw. zweiten Planetenräder 42, 46 bezeichnen.

Die Umschaltung zwischen den beiden Übersetzungsverhältnissen erfolgt hierbei auf Veranlassung einer Kontrolleinheit 58, die Bestandteil der über eine Nutzerschnittstelle 60 bedienbaren Reifenfüllanlage 12 des landwirtschaftlichen Traktors 14 ist, und zwar durch pneumatische Betätigung eines der Bremse 52 bzw. Kupplung 56 jeweils zugeordneten Aktuators 62, 64 nach Maßgabe einer an der Eingangswelle 22 der Getriebeeinheit 20 anliegenden Drehzahl. Letztere wird mittels eines der Eingangswelle 22 zugeordneten Drehzahlsensors 66 erfasst. Die Bremse 52 bzw. Kupplung 56 ist beispielsgemäß als Scheibenbremse bzw. Lamellenkupplung ausgebildet.

Der zur pneumatischen Betätigung von Bremse 52 bzw. Kupplung 56 erforderliche Luftdruck wird vom Luftkompressor 10 selbst erzeugt bzw. bereitgestellt sowie in einem (nicht gezeigten) Pufferakkumulator zwischengespeichert. Die Kupplung 56 ist während der Startphase des Verbrennungsmotors federbelastet geschlossen und lässt sich erst öffnen, wenn ein zur Betätigung ausreichender Mindestluftdruck in der Größenordnung von 6 bis 7 bar erreicht ist.

Durch gleichzeitiges Öffnen von Bremse 52 und Kupplung 56 ist die Antriebsverbindung zur Kompressoreinheit 16 auch vollständig auftrennbar. Dies ermöglicht eine Einsparung von Antriebsenergie in Betriebsphasen, in denen eine Drucklufterzeugung gerade nicht erforderlich ist.

**Patentansprüche**

1. Luftkompressor für eine Reifenfüllanlage, umfassend eine drucklufterzeugende Kompressoreinheit (16) mit einer Antriebswelle (18), und eine zwischen einem ersten und einem zweiten Übersetzungsverhältnis umschaltbare Getriebeeinheit (20), die eine Eingangswelle (22) zum Anschluss an eine Antriebseinrichtung (24) sowie eine mit der Antriebswelle (18) der Kompressoreinheit (16) verbundene Ausgangswelle (26) aufweist.

2. Luftkompressor nach Anspruch 1, **dadurch gekennzeichnet, dass** die Getriebeeinheit (20) ein erstes Planetengetriebe (30) mit einem mit der Eingangswelle (22) drehverbundenen ersten Sonnenrad (32) und ein zweites Planetengetriebe (34) mit einem mit der Ausgangswelle (26) drehverbundenen zweiten Sonnenrad (36) umfasst, wobei an einem gemeinsamen Planetenradträger (38) ein erster Planetenradsatz (40) über erste Planetenräder (42) mit dem ersten Sonnenrad (32) und ein zweiter Planetenradsatz (44) über zweite Planetenräder (46) mit dem zweiten Sonnenrad (36) in Eingriff steht, wobei erste und zweite Planetenräder (42, 46) jeweils drehbar miteinander verbundene Planetenradpaare (48) bilden, wobei zur Umschaltung zwischen den beiden Übersetzungsverhältnissen wahlweise

    (i) in einem ersten Betriebsmodus mittels einer gehäusefesten Bremse (52) eine Drehung des Planetenradträgers (38) blockierbar ist,
    (ii) in einem zweiten Betriebsmodus mittels einer Kupplung (56) eine die beiden Planetengetriebe (30, 34) überbrückende Direktdrehverbindung zwischen der Eingangswelle (22) und der Ausgangswelle (26) herstellbar ist.

3. Luftkompressor nach Anspruch 1 oder 2, **dadurch gekennzeichnet, dass** die beiden Planetengetriebe (30, 34) in Bezug auf die Antriebswelle (18) der Kompressoreinheit (16) koaxial zueinander angeordnet sind.

4. Luftkompressor nach wenigstens einem der vorhergehenden Ansprüche, **dadurch gekennzeichnet, dass** im ersten Betriebsmodus eine Heraufsetzung der Drehzahl zwischen der Eingangs- und Ausgangswelle (22, 26) der Getriebeeinheit (20) erfolgt.

FIG. 1

FIG. 2

FIG. 3

**EUROPÄISCHER RECHERCHENBERICHT**

Europäisches Patentamt
European Patent Office
Office européen des brevets

Nummer der Anmeldung

EP 24 20 7477

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | DE 10 2011 114046 A1 (KNORR-BREMSE SYSTEME FUER NUTZFAHRZEUGE GMBH [DE]) 28. März 2013 (2013-03-28) | 1,3 | INV.<br>F04B35/00<br>F04B35/01 |
| A | * Abbildungen 1-3 *<br>* Absatz [0006] - Absatz [0009] *<br>* Absatz [0030] - Absatz [0037] *<br>* Anspruch 1 *<br>----- | 2,4 | F02B39/06<br>F04B49/20 |
| X | JP 2011 052542 A (UD TRUCKS CORPORATION [JP]) 17. März 2011 (2011-03-17) | 1 | |
| A | * Abbildung 2 *<br>* Absatz [0014] *<br>* Absatz [0021] - Absatz [0039] *<br>----- | 2-4 | |
| A | DE 10 2013 006861 A1 (KNORR BREMSE SYSTEME FUER NUTZFAHRZEUGE GMBH [DE]) 23. Oktober 2014 (2014-10-23)<br>* Abbildungen 1, 2 *<br>* Absatz [0008] - Absatz [0010] *<br>* Absätze [0022], [0023] *<br>* Anspruch 1 *<br>----- | 1-4 | |
| | | | RECHERCHIERTE SACHGEBIETE (IPC) |
| A | CN 220 688 003 U (HANGZHOU JIUYI MACHINERY CO., LTD.) 29. März 2024 (2024-03-29)<br>* Abbildungen 1-3 *<br>* Absatz [0015] - Absatz [0027] *<br>* Anspruch 1 *<br>----- | 1-4 | F04B<br>F02B |

Der vorliegende Recherchenbericht wurde für alle Patentansprüche erstellt

| Recherchenort | Abschlußdatum der Recherche | Prüfer |
|---|---|---|
| München | 22. Januar 2025 | Gnüchtel, Frank |

**ANHANG ZUM EUROPÄISCHEN RECHERCHENBERICHT
ÜBER DIE EUROPÄISCHE PATENTANMELDUNG NR.**     EP 24 20 7477

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

22-01-2025

| Im Recherchenbericht angeführtes Patentdokument | Datum der Veröffentlichung | Mitglied(er) der Patentfamilie | Datum der Veröffentlichung |
|---|---|---|---|
| DE 102011114046 A1 | 28-03-2013 | BR 112014006634 A2 | 04-04-2017 |
|  |  | CN 103827488 A | 28-05-2014 |
|  |  | DE 102011114046 A1 | 28-03-2013 |
|  |  | EP 2758665 A1 | 30-07-2014 |
|  |  | JP 6207511 B2 | 04-10-2017 |
|  |  | JP 2014529046 A | 30-10-2014 |
|  |  | US 2014206494 A1 | 24-07-2014 |
|  |  | WO 2013041596 A1 | 28-03-2013 |
| JP 2011052542 A | 17-03-2011 | KEINE |  |
| DE 102013006861 A1 | 23-10-2014 | BR 112015025782 A2 | 25-07-2017 |
|  |  | CN 105121848 A | 02-12-2015 |
|  |  | DE 102013006861 A1 | 23-10-2014 |
|  |  | EP 2986850 A1 | 24-02-2016 |
|  |  | JP 6138342 B2 | 31-05-2017 |
|  |  | JP 2016516935 A | 09-06-2016 |
|  |  | WO 2014170298 A1 | 23-10-2014 |
| CN 220688003 U | 29-03-2024 | KEINE |  |

EPO FORM P0461

Für nähere Einzelheiten zu diesem Anhang : siehe Amtsblatt des Europäischen Patentamts, Nr.12/82